(19) **Europäisches Patentamt**

**European Patent Office**

**Office européen des brevets**

(11) **EP 0 631 370 B1**

(12) **EUROPEAN PATENT SPECIFICATION**

(45) Date of publication and mention
of the grant of the patent:
**28.05.2003 Bulletin 2003/22**

(51) Int Cl.[7]: **H02M 3/07**

(21) Application number: **94201733.6**

(22) Date of filing: **17.06.1994**

(54) **Voltage multiplier for high output current with stabilized output voltage**

Spannungsvervielfacher für hohen Ausgangsstrom mit stabilisierten Ausgangsspannung

Multiplicateur de tension à fort courant de sortie avec tension de sortie stabilisée

(84) Designated Contracting States:
**DE FR GB IT**

(30) Priority: **21.06.1993 EP 93830265**

(43) Date of publication of application:
**28.12.1994 Bulletin 1994/52**

(73) Proprietor: **STMicroelectronics S.r.l.**
**20041 Agrate Brianza (Milano) (IT)**

(72) Inventors:
• **Nicollini, Germano**
**I-29100 Piacenza (IT)**

• **Confalonieri, Pierangelo**
**I-24040 Canonica d'Adda (IT)**
• **Crippa, Carlo**
**I-22055 Merate (IT)**

(74) Representative: **Pellegri, Alberto et al**
**c/o Società Italiana Brevetti S.p.A.**
**Piazza Repubblica, 5**
**21100 Varese (IT)**

(56) References cited:
**EP-A- 0 257 810      EP-A- 0 540 948**
**US-A- 5 038 266      US-A- 5 173 627**

EP 0 631 370 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention concerns a charge pumping circuit (e.g. voltage multiplier or voltage booster), which is provided with an innovative arrangement for stabilizing its output voltage.

Often in electronic systems there is a need of generating a DC voltage higher than the supply voltage. Such a voltage boosting function is commonly effected with a so-called voltage multiplier or voltage booster. However, the circuit implementations of a voltage booster may be differ considerably depending on the level of the current that the circuit should be able to deliver.

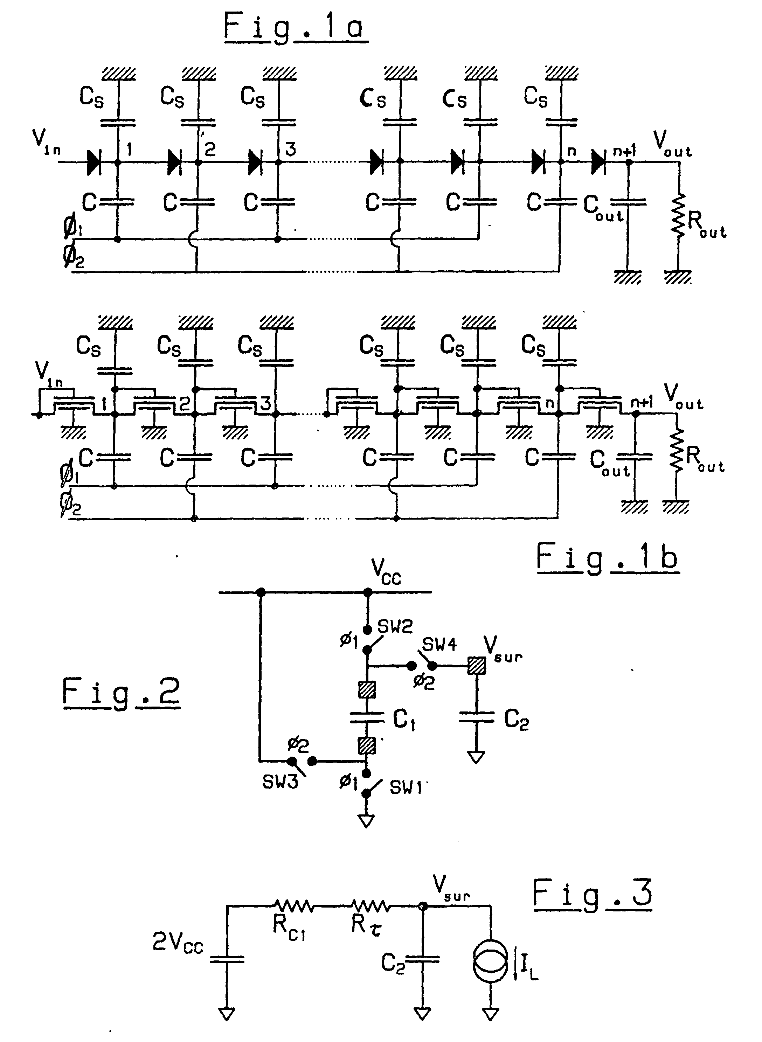

For relatively low output current levels (in the order of 10 μA), as in the case of write operations of EPROM memories, an often used solution is the circuit shown in Fig. 1a (employing bipolar junction transistors BJT) or in Fig. 1b (employing MOS transistors), as described in Witters *et al.*, "Analysis and Modelling of On-Chip High-Voltage Generator Circuits for Use in EEPROM Circuits", 24 IEEE JOURNAL OF SOLID-STATE CIRCUITS 1372 (October 1989), which is hereby incorporated by reference.

Conversely, when the voltage multiplier must deliver output currents of a remarkable level (in the order of ten mA), as in the case of analog integrated circuits wherein the supply voltage must be doubled or tripled for attaining certain performances, a typical solution requires the employment of at least two large capacitances (normally external to the integration circuit). A first capacitor $C_1$ is used for loading and transfering electric charge, while the second capacitor $C_2$ has the function of storing the periodically transferred charge, as schematically depicted in Fig. 2. The four switches (SW1, SW2, SW3, SW4) are driven by first and second phase control signals ($\phi_1$ and $\phi_2$).

Basically, during a first phase ($\phi_1$) of the control clock, the capacitance $C_1$ is connected between $V_{CC}$ and ground (GND) and therefore a voltage equal to $V_{CC}$ develops on the "upper" terminal as referred to the "lower" terminal of the capacitor that is connected to ground. During a second phase ($\phi_2$) of the control clock, the lower terminal is connected to $V_{CC}$ while the upper terminal is connected to the output node (on $C_2$), onto which a voltage $V_{sur}$ develops.

If the output current is null, then it is easy to see that, after several clock periods, the output voltage $V_{sur}$ would become equal to $2V_{CC}$ and perfectly stable. The output capacitance $C_2$ stores the output voltage $V_{sur}$.

When a load connected to the output node ($V_{sur}$) draws current, the resulting value of the output voltage $V_{sur}$ will be determined by the balance between the current drawn by the load and the quantity of charge per unit time delivered through the transfer capacitance $C_1$, while the output capacitance $C_2$ limits the amplitude of the "ripple" of the output voltage $V_{sur}$r.

In Callias *et al.*, "A Set of Four IC's in CMOS Technology for a Programmable Hearing Aid", 24 IEEE JOURNAL OF SOLID-STATE CIRCUITS 301 (April 1989), which is hereby incorporated by reference, it is explained that the value of the output voltage $V_{sur}$ in case of current absorption by a load, may be easily calculated by analyzing the equivalent circuit shown in Fig. 3.[1] By following such a derivation, the value of the output voltage in the circuit of Figure 2 may be seen to be given by the following relationship:

$$V_{sur} = 2V_{CC} - (R_{C1} + R_\tau)I_L$$

where $R_{C1}$ and $R_\tau$ are respectively given by the following equations:

$$R_{C1} = \frac{1}{f_s C_1}$$

$$R_\tau = \frac{1}{f_S C_A}[\frac{e^{-t/t_1}}{1-e^{-t/t_1}}+\frac{e^{-t/t_2}}{1-e^{-t/t_2}}]$$

where $C_A$ is the capacitance of $C_1$ and $C_2$ in series, and $t_1$ and $t_2$ are RC time constants:

$$C_A = \frac{C1\,C2}{C1+C2}$$

$$t_1 = (r_{ON1}+r_{ON2})C_1$$

$$t_2 = (r_{ON3}+r_{ON4})C_A$$

In the equations above, $f_s$ is the switching frequency of the control clock, and the $r_{ON}$ values represent the respective internal resistance of the switches SW1, SW2, SW3 and SW4, that are employed in the circuit. As may be easily observed, the effective value of the output voltage $V_{sur}$ depends strongly not only on the current $I_L$ absorbed by the load and the value of the supply voltage $V_{CC}$, but also on the internal resistances $r_{ON}$ of the transistors that implement the switches SW1, SW2, SW3 and SW4, that drive the circuit.

The on-resistance of a transistor is an intrinsic parameter which is notoriously dependent from the fab-

[1] By adding more and more stages, it is possible to attain higher multiplication factors, while maintaining a single storing capacitance $C_2$ connected between the output node ($V_{sur}$) and ground (GND). For example, Callias *et al.* point out that, if it is desired to triple the voltage $V_{CC}$, it is sufficient to employ two capacitances $C_{1a}$ and $C_{1b}$ (in addition to the capacitor $C_2$). During the phase φ1, capacitances $C_{1a}$ and $C_{1b}$ would both charge to $V_{CC}$, while during the successive phase φ2, capacitances $C_{1a}$ and $C_{1b}$ would be connected in series (that is with the lower terminal of the first of the two capacitances $C_{1a}$ connected to $V_{CC}$ and the upper terminal of the second capacitor $C_{1b}$ connected to $V_{sur}$) between $V_{CC}$ and the output node.

rication process, temperature, supply voltage, etc. Many high precision analog circuits cannot tolerate an excessive spread of the actual output voltage ($V_{sur}$) from the design value.

Thus, a main object of the present invention is to provide a simple low-power voltage multiplier or voltage booster, designed for a relatively high output current, the output voltage of which is stable and substantially independent from process spread, temperature, supply voltage and, within certain limits, also from the output current that is actually delivered to a load.

This object and other advantages are achieved by the output voltage stabilizing circuit of the present invention. The circuit of the invention employs an integrating stage, capable of generating a DC error signal, representative of the difference between a reference voltage and the output voltage of the voltage multiplier. The error signal is employed for driving (during a conduction phase of the operating cycle of the multiplier) a transistor that acts as a switch for connecting to ground at least a charge transfer capacitance ($C_1$) of the voltage multiplier. The generated error signal effectively controls the internal resistance $r_{ON}$, so as to keep constant the output voltage $V_{sur}$ of the voltage multiplier.

Such a driving error signal is fed to a control terminal of the transistor (switch) that connects to ground the charge transfer capacitance of at least a stage of the voltage multiplier, under control of a pair of timing signals, which control a transfer gate of the signal and an auxiliary switch for discharging the control node of the transistor (switch) driven by the error signal.

In the preferred CMOS implementation, PMOS transistors are used to connect the upper terminal of the charge transfer capacitor alternately to the positive supply voltage Vcc and the pumped voltage Vsur, and overdriven clock voltages are used to assure reliable turn-off of these transistors.

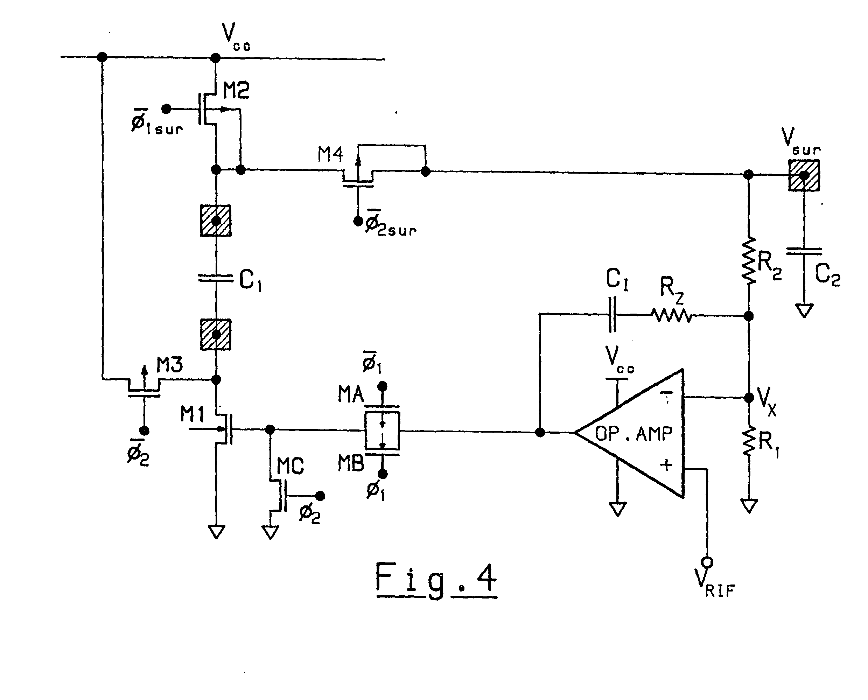

Some attempts have been made to provide regulation of a pumped voltage. European application EP-A-0540948 of Zavaleta (Motorola) uses a feedback loop to act on the $r_{ON}$ of a MOS transistor for regulating the output of the charge pump at the desired value. However, the presently preferred embodiment of the present application provides advantages over the Motorola circuit in the manner of implementing the feedback loop. As may be observed from Fig. 4 of the Motorola application, the circuit that implements a proportional + integral function is very complex. It uses three amplifiers (120, 130 and 142), three capacitances (137, 135 and 139), and several switches. By contrast, the innovative circuit disclosed in the present application provides a very simple structure composed of a single amplifier, a capacitance and a resistance for implementing the same function.

Moreover, since the Motorola circuit separates the proportional function from the integral function pair, they are obliged to drive two PMOS transistors (150 and 151) in order to vary the $r_{ON}$; but in the present invention the two functions are implemented together, and in the presently preferred embodiment driving a single n-channel MOS suffices.

Last but not least, given that a main objective in battery powered systems is to limit power consumption as much as possible for prolonging the life of the battery, the innovative circuit of the presently preferred embodiment consumes much less current (power) than the Motorola's circuit. The disclosed circuit employs a single amplifier directly powered by the battery, while Motorola utilizes three amplifiers, of which at least two (120 and 142) are powered at high (boosted) voltage, that is they consume at least five times the current that is consumed in the innovative circuit of the presently preferred embodiment for implementing the feedback loop. In this connection, it should also be noted that the Motorola circuit which generates PTUBBIAS, which biases the n-wells of the PMOS 150, 151, 152 and 154 at the highest potential of VBAT and VDD in order to avoid direct biasing, does not satisfy at all the function that is required at power-up. In fact, by supposing that at power-down VDD = 0V and that therefore PTUBBIAS = VBAT, when leaving the power-down condition, the capacitance 80 will have charged to VBAT during $\phi1$ and therefore, during $\phi2$, will tend to strongly pull-up the node 72, thus forward biasing the diode from p$^+$ (node 72) to n-well (common to 150, 151 and 152). This could give rise to a sudden current absorption in the order of 10-60 mA from VBAT, unduly degrading the battery.

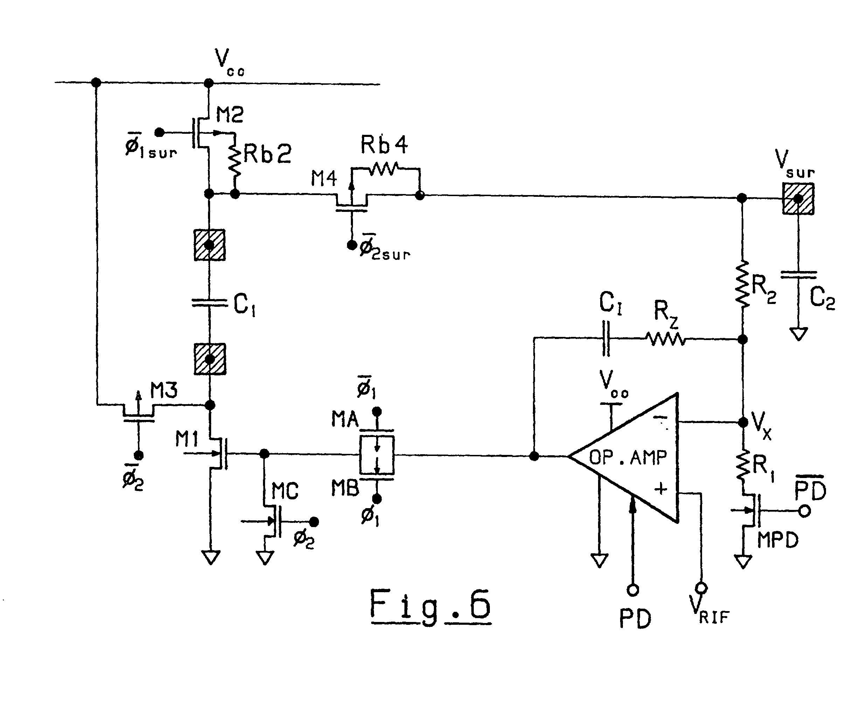

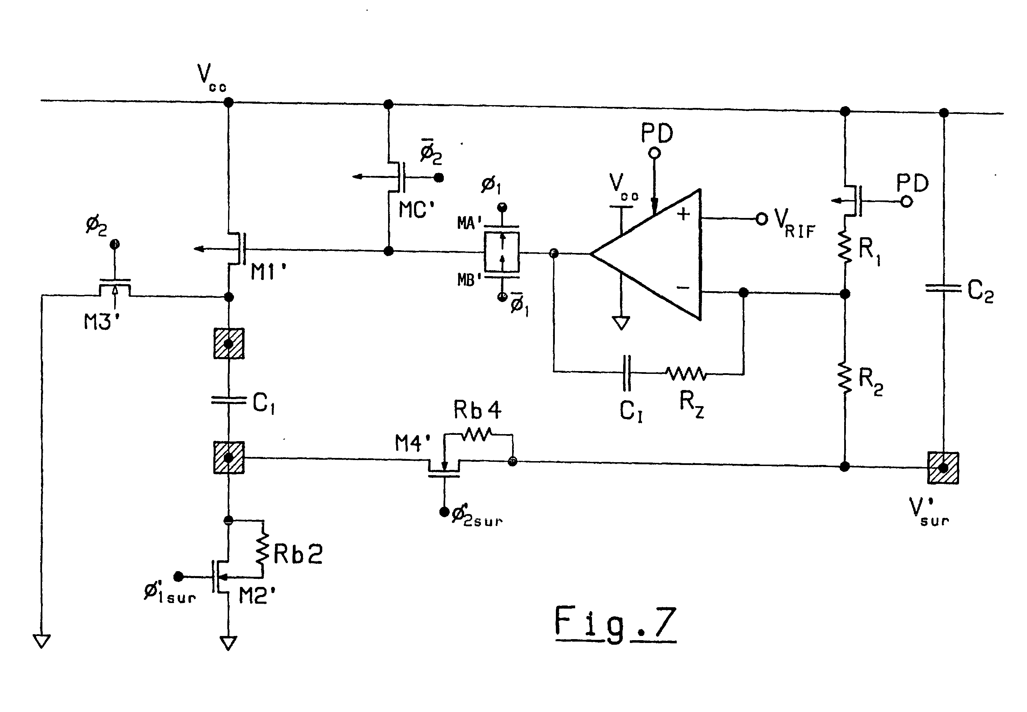

The improved circuit embodiments of Figures 6 and 7 provide an additional protection against a current surge when power is first applied, by including small resistors in series with the wells of the devices which are interposed between Vcc and the pumped node $V_{sur}$. Preferably these resistors are formed merely by lateral extensions of the n-well diffusion.

The invention is defined in the annexed claims 1 and 7, in terms of a novel voltage multiplier circuit and in terms of a novel method to generate a multiplied voltage, respectively.

Preferred embodiments are recited in dependent claims 2-6 and 8.

The disclosed inventions will be described with reference to the accompanying drawings, which show important sample embodiments of the invention and which are incorporated in the specification hereof by reference, wherein:

The different aspects and advantages of the circuit of the invention will be more easily understood through the following description of an important embodiment and by referring to the annexed drawings, wherein:

Figure 1a is a circuit diagram of a voltage multiplier for low output current, made with bipolar junction components, as described above;
Figure 1b is a circuit diagram of a voltage multiplier for low output current, made with MOS components, as already described above;

Figure 2 is a functional diagram of a voltage multiplier suitable to deliver a relatively high output current;

Figure 3 is an equivalent circuit of the functional diagram of Fig. 2;

Figure 4 is a functional diagram of a voltage multiplier provided with means for stabilizing the output voltage, according to the present invention;

Figure 5 is a timing diagram of the various signals of the circuit of the invention;

Figure 6 shows an alternative embodiment which has now been discovered to be advantageous;

Figure 7 shows a further alternative embodiment in a P-well CMOS process; and

Figure 8 shows voltage waveforms for the embodiment of Figure 7, and signal levels during power-down.

The numerous innovative teachings of the present application will be described with particular reference to the presently preferred embodiment (by way of example, and not of limitation), in which:

By referring to the circuit diagram of Fig. 4, the feedback loop for stabilizing the output voltage of the circuit according to the presently preferred embodiment of the present invention, may be structured as follows.

A voltage divider, which in the example shown, is represented by the two resistances R1 and R2 connected in series between the output node $V_{sur}$ of the voltage multiplier circuit and a common ground node of the circuit, provides on an intermediate node thereof, an attenuated replica of the output voltage $V_{sur}$ of the voltage multiplier. This replica signal is fed to an inverting input of an operational amplifier OP-AMP, which, being powered at $V_{CC}$, could not otherwise tolerate an input voltage higher than $V_{CC}$.

An integrating stage is constituted by the operational amplifier OP-AMP, provided with a feedback loop that essentially comprises an integrating capacitance $C_I$. The integrating stage practically compares the replica signal $V_x$, provided by the voltage divider R1-R2, with a reference voltage $V_{RIF}$ and outputs a DC error signal.

A switch or "transfer gate", which, as in the example shown, may be composed of a MOS transistor pair MA-MB (where MA is PMOS and MB NMOS), is controlled by a first clock phase $\phi_1$ and by its inverted replica $\phi_1$\. The transfer gate MA-MB, during a first phase $\phi_1$ of the control clock, transfers the error signal generated by the integrating stage to the control gate of the NMOS trnasistor M1, which constitutes the switch SW1 of the functional circuit of the voltage multiplier (Fig. 2).

A third MOS transistor MC is activated by the clock's phase $\phi_2$ and during this phase of the clock's cycle, connects to ground the gate of M1, thus ensuring its cut-off.

By virtue of the high DC gain of the stabilizing feedback loop, the feedback forces the condition:

$$V_x = V_{RIF}$$

and therefore:

$$V_{sur} = V_{RIF}\frac{R_1+R_2}{R_1}$$

It should be immediately noted from the above equation that the output voltage $V_{sur}$ is independent from process spreads, temperature, $V_{CC}$ and output current delivered to a load.

A resistance $R_z$, connected in series with the integrating capacitance $C_I$ of the feedback line of the operational amplifier OP-AMP, has an important function for ensuring a great stability of the circuit. In fact, the circuit presents two low-frequency "poles" (the DC pole of the integrating stage and a second low-frequency pole intrinsic to the equivalent circuit of the voltage multiplier circuit, as depicted in Fig. 3) that would tend to restrict the stability margin. The introduction of a resistance $R_z$, in series with $C_I$ in the feedback line, determines the creation of a low-frequency "zero" that compensates a low-frequency "pole", thus enhancing stability.

The positive effects of the resistance $R_z$ may be observed also during the power-on transient of the circuit, during which the system operates in a nonlinear manner. The presence of a series resistance $R_z$ reduces the "settling" time (the time that the circuit employs from the power-on instant to reach a steady state condition, that is for developing the design voltage $V_{sur}$ on its output node) by a factor that may be comprised between 10 and 1000, depending upon operating conditions and structural parameters of the circuit (process, temperature, output current, $V_{CC}$).

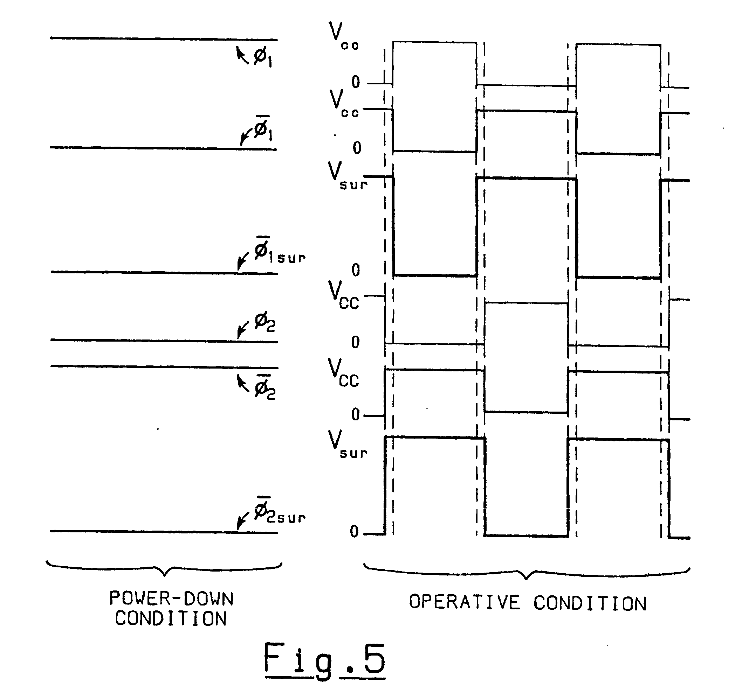

A timing diagram showing the waveform of the control signals employed in the circuit of Fig. 4, according to an embodiment of the invention, are shown in Fig. 5.

As may be seen, the phase $\phi_1$ ($\phi_1$ and $\phi_1$\) is generally coincident with the phase $\phi_{1sur}$, while the phase $\phi_2$ ($\phi_2$, $\phi_2$\) is generally coincident with the phase $\phi_{2sur}$. However, note that this is NOT true of $\phi_{2sur}$\ in the power-down condition: in the power-down condition both $\phi_{1sur}$\ and $\phi_{2sur}$\ are low, and therefore both M2 and M4 will turn on as Vcc rises.

The phases $\phi_{1sur}$\ and $\phi_{2sur}$\ may be generated, *e.g.*, by a timing circuit powered at the output voltage $V_{sur}$ of the voltage multiplier. In other words, the driving phases $\phi_{1sur}$\ and $\phi_{2sur}$\ are voltage-boosted phases. The other switches M3 (PMOS), MC, MA and MB may be controlled by control phases that are generated by a timing circuit similar to the one employed for generating

the boosted phases $\phi_{1sur}\backslash$ and $\phi_{2sur}\backslash$, but powered at the supply voltage $V_{CC}$. This is not strictly essential for the operation of the circuit, and, in practice, also the switches M3, MC, MA and MB may be controlled by employing the same voltage boosted phases $\phi_{1sur}\backslash$-$\phi_{1sur}$ and $\phi_{2sur}\backslash$-$\phi_{2sur}$, as will be evident to a person skilled in the art.

In the sample implementation of Figure 4, note that transistors M2, M3, and M4 are all PMOS. This helps to avoid incurring $V_T$ drops from the supply voltage $V_{CC}$. However, of course, one of ordinary skill in the art can implement the disclosed invention in various other circuit arrangements, and in technologies other than CMOS.

Figure 6 shows an alternative embodiment which has been discovered to be advantageous. The circuit of Figure 4, wherein the n-well of two PMOS devices (M1 and M4) have been joined to the respective sources, may still exhibit a current spike at power-up. Figure 6 shows a further improvement of this circuit, including an expedient for reducing drastically the current spike at power-up.

In a power-down condition M1, M2, M4 are ON and M3 is OFF, as shown at the left side of Figure 5. (The clocks are conditioned on the power-down signal PD, which is used to reduce to zero the current consumption of the IC and of the voltage multiplier when the IC itself is not used). Moreover, during power-down, the added MOS MPD (gated by complemented power-down signal PD\) is OFF (and therefore prevents current consumption by the voltage divider R1+R2), while the amplifier turns off, forcing its output to Vcc voltage (thus confirming ON the transistor M1). In this embodiment, two resistors Rb2 and Rb4 have been inserted in series with the n-wells of M2 and M4, respectively, in order to limit the current spikes at power-up. From simulation, it has been found that a resistance of a few $K\Omega$, which may be realized with the n-well cell itself, will be sufficient to reduce the injection of current by a factor of 100, that is to a few tenths of a milliAmp, which should be readily tolerated by the battery.

Note that the resistors Rb2 and Rb4 do not pass any significant current during normal operation: the importance of these resistors is primarily at start-up.

Figure 7 shows a further alternative embodiment in which charge pumping is used to achieve a negative voltage $V_{sur}'$ from a positive supply, in a P-well CMOS process. In this embodiment the polarities and connections of many of the transistors have been reversed, and accordingly the reference numerals have been primed. Thus PMOS M1' in Fig. 7 is analogous to NMOS M1 in Fig. 6, NMOS M2' in Fig. 7 is analogous to PMOS M2 in Fig. 6, NMOS M3' in Fig. 7 is analogous to PMOS M3 in Fig. 6, NMOS M4' in Fig. 7 is analogous to PMOS M4 in Fig. 6, PMOS MC' in Fig. 7 is analogous to NMOS MC in Fig. 6, PMOS MB' of Fig. 7 is analogous to NMOS MB of Fig. 6 and NMOS MA' of Fig. 7 is analogous to PMOS MA of Fig. 6. , A similar polarity-reversal is applied to the clock signals: note that $\phi_1$ in Figure 6

is replaced by its complement $\phi_1\backslash$ in Figure 7, and $\phi_2$ is replaced by its complement $\phi_2\backslash$. Moreover, the overdriven positive clocks $\phi_{1sur}$ and $\phi_{2sur}$ are replaced by negatively overdriven (sub-ground) clocks $\phi_{1sur}'$ and $\phi_{2sur}'$. As in Figure 6, the resistors Rb2 and Rb4 limit the current surge caused by shifting the potential of the wells when power is first applied.

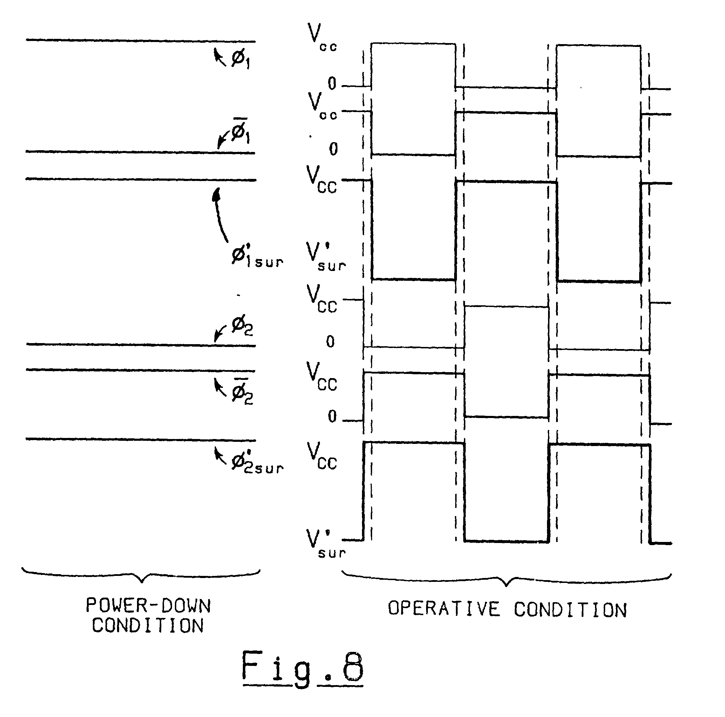

The timing diagram of Figure 8 shows the clock voltage levels in the circuit of Figure 7, in power-down and in operating conditions. Note that in the power-down condition transistors M2' and M4' are both ON.

Of course, these alternatives are merely a few of the many possible modifications and variations which may be made to the innovative ideas as disclosed in claim 1.

## Claims

1. A voltage multiplier circuit, comprising:

at least a first charge transfer capacitance (C1) and a second output storing capacitance (C2); a first switch (M1), for connecting to ground a first terminal of said first capacitance (C1); said first terminal of said first capacitance being connected to ground only through said first switch; a second switch (M2) for connecting a second terminal of said first capacitance (C1) to a supply node (Vcc); a third switch (M3) for connecting said first terminal of said first capacitance (C1) to said supply node; a fourth switch (M4) for connecting the second terminal of said first capacitance (C1) to a first terminal of said second capacitance (C2) which provides an output node of the voltage multiplier; said second switch (M2) being controlled by a first clock phase ($\Phi1_{sur}$) and said third (M3) and fourth (M4) switches being controlled by a second clock phase ($\Phi2$); and further comprising a voltage divider (R1, R2) functionally connected between said output node and ground; a differential amplifier (OP AMP) having a noninverting input (+) to which a reference voltage (Vrif) is fed, an inverting input (-) connected to an intermediate node of said voltage divider (R1, R2) and to the output of the amplifier (OP AMP) through a series comprising an integrating capacitance (CI) and a resistance (Rz); a first transfer gate (MA, MB), controlled by a first timing signal ($\Phi1$) and by a complementary signal ($\Phi1$), coincident with said first clock phase ($\Phi1_{sur}$), an input of said transfer gate being connected to said output of the amplifier and an output of said transfer gate being connected to a control terminal of said first switch (M1);
a fifth switch (MC), controlled by a second timing signal (Φ2) coincident with said second clock phase (Φ2) being functionally connected between said control terminal of said first switch (M1) and ground.

2. The circuit of claim 1, further comprising one or more resistors (R2, R4) interconnected with said second (M2) and fourth (M4) switches to limit transient current between said first supply node (Vcc) and said output capacitor (C2), when power is first applied to said first supply node.

3. The circuit of claim 1, wherein said first switch (M1) consists of an N-channel insulated-gate filed-effect transistor.

4. The circuit of claim 1, wherein said second (M2), third (M3), and fourth (M4) switches each consist of a P-channel insulated-gate field-effect transistor.

5. The circuit of claim 1, wherein said second (M2) and fourth (M4) switches each consist of a P-channel insulated-gate filed-effect transistor, and are connected to be driven by a clock voltage ($\Phi1_{sur}$, $\Phi2_{sur}$) which is at least approximately equal to the multiplied voltage.

6. The circuit of claim 1, wherein said transfer gate (MA, MB) consists of a P-channel insulated-gate field-effect transistor connected in parallel with an N-channel insulated-gate filed-effect transistor.

7. A method for generating from first and second supply voltages (Vcc, GND), using at least one charge transfer capacitor (C1), a pumped voltage (Vsur), on an output storing capacitor (C2), which is not intermediate between said first and second supply voltages, comprising the steps of:

    a) on a first clock phase (Φ1), connecting a first terminal of said charge transfer capacitor (C1) to said first supply voltage (Vcc), and connecting a second terminal of said charge transfer capacitor to said second supply voltage (GND), using at least one variable impedance element (M1) which is regulated in accordance with variations of said pumped voltage (Vsur) from a target voltage,
    b) on a second clock phase (Φ2) which does not overlap with said first clock phase (Φ1), connecting (M3) said second terminal of said charge transfer capacitor (C1) to said first supply voltage (Vcc), and connecting (M4) said first terminal of said charge transfer capacitor to provide said pumped voltage (Vsur) on said output storing capacitor (C2),

said steps a) and b) being repeatedly alternately, **characterized by** comprising the additional step of

    dividing down said pumped voltage, using a voltage divider (R1, R2) and disabling it during a power-down condition, to provide a scaled voltage (Vx) comparing the scaled voltage against a reference voltage (Vrif) and controlling said variable impedance element (M1) accordingly.

8. The method of claim 7, further comprising the step of routing at least some of the transient current between said first power supply and said output storing capacitor through one or more series resistors, when power is first applied.


**Patentansprüche**

1. Spannungsvervielfachungsschaltung, die umfaßt:

    wenigstens eine erste Ladungsübertragungskapazität (C1) und eine zweite Ausgangsspeicherkapazität (C2);
    einen ersten Schalter (M1), der einen ersten Anschluß der ersten Kapazität (C1) mit Masse verbindet; wobei der erste Anschluß der ersten Kapazität nur über den ersten Schalter mit Masse verbunden ist;
    einen zweiten Schalter (M2), der einen zweiten Anschluß der ersten Kapazität (C1) mit einem Versorgungsknoten (Vcc) verbindet;
    einen dritten Schalter (M3), der den ersten Anschluß der ersten Kapazität (C1) mit dem Versorgungsknoten verbindet;
    einen vierten Schalter (M4), der den zweiten Anschluß der ersten Kapazität (C1) mit einem ersten Anschluß der zweiten Kapazität (C2) verbindet, die einen Ausgangsknoten für den Spannungsvervielfacher schafft;
    wobei der zweite Schalter (M2) durch eine erste Taktphase ($\Phi1_{sur}$) gesteuert wird und der dritte Schalter (M3) sowie der vierte Schalter (M4) durch eine zweite Taktphase (Φ2) gesteuert werden;
    und ferner umfaßt: einen Spannungsteiler (R1, R2), der funktional zwischen den Ausgangsknoten und Masse geschaltet ist;
    einen Differenzverstärker (OP AMP), der einen nichtinvertierenden Eingang (+), an den eine Referenzspannung ($V_{rif}$) angelegt wird, und einen invertierenden Eingang (-), der an einen Zwischenknoten des Spannungsteilers (R1, R2) und an den Ausgang des Verstärkers (OP AMP) über eine Reihenschaltung aus einer Integrationskapazität (CI) und einem Widerstand ($R_z$) angeschlossen ist, besitzt;
    ein erstes Übertragungsgatter (MA, MB), das durch ein erstes Taktsignal (Φ1) und durch ein komplementäres Taktsignal (Φ1), das mit der ersten Taktphase (Φ1$_{sur}$) übereinstimmt, gesteuert wird, wobei ein Eingang des Übertragungsgatters mit dem Ausgang des Verstärkers verbunden ist und ein Ausgang des Übertragungsgatters mit einem Steueranschluß des ersten Schalters (M1) verbunden ist;
einen fünften Schalter (MC), der durch ein zweites Taktsignal (Φ2) gesteuert wird, das mit der zweiten Taktphase (Φ2) übereinstimmt, der funktional zwischen den Steueranschluß des ersten Schalters (M1) und Masse geschaltet ist.

2. Schaltung nach Anspruch 1, die ferner einen oder mehrere Widerstände (R2, R4) umfaßt, die mit dem zweiten Schalter (M2) und mit dem vierten Schalter (M4) verbunden sind, um einen Einschaltstrom zwischen dem ersten Versorgungsknoten (Vcc) und dem Ausgangskondensator (C2) zu begrenzen, wenn Leistung zuerst an den ersten Versorgungsknoten angelegt wird.

3. Schaltung nach Anspruch 1, bei der der erste Schalter (M1) aus einem N-Kanal-Feldeffekttransistor mit isoliertem Gate besteht.

4. Schaltung nach Anspruch 1, bei der der zweite Schalter (M2), der dritte Schalter (M3) und der vierte Schalter (M4) jeweils aus einem P-Kanal-Feldeffekttransistor mit isoliertem Gate bestehen.

5. Schaltung nach Anspruch 1, bei der der zweite Schalter (M2) und der vierte Schalter (M4) jeweils aus einem P-Kanal-Feldeffekttransistor mit isoliertem Gate bestehen und miteinander so verbunden sind, daß sie durch eine Taktspannung (Φ1$_{sur}$, Φ2$_{sur}$), die wenigstens angenähert gleich der vervielfachten Spannung ist, angesteuert werden.

6. Schaltung nach Anspruch 1, bei der das Übertragungsgatter (MA, MB) aus einem P-Kanal-Feldeffekttransistor mit isoliertem Gate besteht, der zu dem N-Kanal-Feldeffekttransistor mit isoliertem Gate parallelgeschaltet ist.

7. Verfahren zum Erzeugen einer gepumpten Spannung (V$_{sur}$) an einem Ausgangsspeicherkondensator (C2) aus einer ersten und einer zweiten Versorgungsspannung (V$_{cc}$, GND) unter Verwendung wenigstens eines Ladungsübertragungskondensators (C1), wobei sich der Ausgangsspeicherkondensator (C2) nicht zwischen der ersten und der zweiten Versorgungsspannung befindet, wobei das Verfahren die folgenden Schritte umfaßt:

a) in einer ersten Taktphase (Φ1) Verbinden eines ersten Anschlusses des Ladungsübertragungskondensators (C1) mit der ersten Versorgungsspannung (Vcc) und Verbinden eines zweiten Anschlusses des Ladungsübertragungskondensators mit der zweiten Versorgungsspannung (GND) unter Verwendung wenigstens eines Elements (M1) mit variabler Impedanz, das in Übereinstimmung mit Änderungen der gepumpten Spannung (V$_{sur}$) gegenüber einer Sollspannung reguliert wird,
b) in einer zweiten Taktphase (Φ2), die mit der ersten Taktphase (Φ1) nicht überlappt, Verbinden (M3) des zweiten Anschlusses des Ladungsübertragungskondensators (C1) mit der ersten Versorgungsspannung (Vcc) und Verbinden (M4) des ersten Anschlusses des Ladungsübertragungskondensators, um an dem Ausgangsspeicherkondensator (C2) die gepumpte Spannung (V$_{sur}$) bereitzustellen,

wobei die Schritte a) und b) abwechselnd wiederholt werden, **gekennzeichnet durch** den folgenden zusätzlichen Schritt:

Abwärtsteilen der gepumpten Spannung unter Verwendung eines Spannungsteilers (R1, R2) und Sperren des Teilers während eines Abschaltzustands, um eine skalierte Spannung (V$_x$) zu schaffen, Vergleichen der skalierten Spannung mit einer Referenzspannung (V$_{rif}$) und Steuern des Elements (M1) mit variabler Impedanz entsprechend.

8. Verfahren nach Anspruch 7, das ferner den Schritt des Leitens wenigstens eines Teils des Einschaltstroms zwischen der ersten Leistungsversorgung und dem Ausgangsspeicherkondensator über einen oder mehrere Reihenwiderstände, wenn die Leistung erstmalig angelegt wird.

## Revendications

1. Circuit multiplieur de tension comprenant :

au moins une première capacité de transfert de charge (C1) et une seconde capacité de mémorisation de sortie (C2) ;
un premier commutateur (M1) pour connecter à la masse une première borne de la première capacité (C1), la première borne de la première capacité étant connectée à la masse seulement par l'intermédiaire du premier commutateur ;
un deuxième commutateur (M2) pour connecter une seconde borne de la première capacité (C1) à un noeud d'alimentation (Vcc) ;
un troisième commutateur (M3) pour connecter la première borne de la première capacité (C1) au noeud d'alimentation ;

un quatrième commutateur (M4) pour connecter la seconde borne de la première capacité (C1) à une première borne de la seconde capacité (C2) qui fournit un noeud de sortie du multiplieur de tension ;

le deuxième commutateur (M2) étant commandé par une première phase d'horloge ($\varphi 1_{sur}$) et les troisième (M3) et quatrième (M4) commutateurs étant commandés par une seconde phase d'horloge ($\varphi 2$) ;

et comprenant en outre un diviseur de tension (R1, R2) fonctionnellement connecté entre le noeud de sortie et la masse ;

un amplificateur différentiel (OP AMP) ayant une entrée non inverseuse (+) à laquelle une tension de référence (Vrif) est fournie, et une entrée inverseuse (-) connectée à un noeud intermédiaire du diviseur de tension (R1, R2) et à la sortie de l'amplificateur (OP AMP) par l'intermédiaire d'un montage en série comprenant une capacité intégratrice (CI) et une résistance (Rz) ;

une première porte de transfert (MA, MB) commandée par un premier signal de synchronisation ($\varphi 1$) et par un signal complémentaire ($\overline{\varphi 1}$) en coïncidence avec la première phase d'horloge ($\varphi 1_{sur}$), une entrée de la porte de transfert étant connectée à la sortie de l'amplificateur et une sortie de la porte de transfert étant connectée à une borne de commande du premier commutateur (M1) ;

un cinquième commutateur (MC) commandé par un second signal de synchronisation ($\varphi 2$) en coïncidence avec la seconde phase d'horloge ($\varphi 2$), fonctionnellement connecté entre la borne de commande du premier commutateur (M1) et la masse.

2. Circuit selon la revendication 1, comprenant une ou plusieurs résistances (R2, R4) interconnectées avec les deuxième (M2) et quatrième (M4) commutateurs pour limiter le courant transitoire entre le premier noeud d'alimentation (Vcc) et le condensateur de sortie (C2) quand une alimentation est appliquée pour la première fois au premier noeud d'alimentation.

3. Circuit selon la revendication 1, dans lequel le premier commutateur (M1) comprend un transistor à effet de champ à grille isolée à canal N.

4. Circuit selon la revendication 1, dans lequel les deuxième (M2), troisième (M3) et quatrième (M4) commutateurs comprennent chacun un transistor à effet de champ à grille isolée à canal P.

5. Circuit selon la revendication 1, dans lequel les deuxième (M2) et quatrième (M4) commutateurs comprennent chacun un transistor à effet de champ à grille isolée à canal P et sont connectés pour être pilotés par une tension d'horloge ($\varphi 1_{sur}$, $\varphi 2_{sur}$) qui est au moins sensiblement égale à la tension multipliée.

6. Circuit selon la revendication 1, dans lequel la porte de transfert (MA, MB) comprend un transistor à effet de champ à grille isolée à canal P connecté en parallèle avec un transistor à effet de champ à grille isolée à canal N.

7. Procédé de génération de première et seconde tensions d'alimentation (Vcc, GND), en utilisant au moins un condensateur de transfert de charge (C1), une tension pompée ($V_{sur}$) sur un condensateur de mémorisation de sortie (C2), qui n'est pas intermédiaire entre les première et seconde tensions d'alimentation, comprenant les étapes suivantes :

a) lors d'une première phase d'horloge ($\varphi 1$) connecter une première borne du condensateur de transfert de charge (C1) à la première tension d'alimentation (Vcc), et connecter une seconde borne du condensateur du transfert de charge à la seconde tension d'alimentation (GND) en utilisant au moins un élément à impédance variable (M1) qui est régulé en fonction des variations de la tension pompée (Vsur) à partir d'une tension cible ;

b) lors d'une seconde phase d'horloge ($\varphi 2$) non en recouvrement avec la première phase d'horloge ($\varphi 1$), connecter (M3) la seconde borne du condensateur de transfert de charge (C1) à la première tension d'alimentation (Vcc) et connecter (M4) la première borne du condensateur de transfert de charge pour fournir la tension (Vsur) sur le condensateur de mémorisation de sortie (C2) ;

les étapes a) et b) étant répétées de façon alternée, **caractérisé en ce qu'**il comprend l'étape supplémentaire suivante :

diviser la tension pompée, en utilisant un diviseur de tension (R1, R2) et l'invalider pendant un état de chute d'alimentation, pour fournir une tension mise à l'échelle (Vx), comparer la tension mise à l'échelle à une tension de référence (Vrif), et commander l'élément à impédance variable (M1) en conséquence.

8. Procédé selon la revendication 7, comprenant en outre l'étape consistant à acheminer au moins une partie du courant transitoire entre la première alimentation et le condensateur de mémorisation de sortie par l'intermédiaire d'une ou plusieurs résistances série quand la tension est appliquée pour la première fois.

Fig.1a

Fig.1b

Fig.2

Fig.3

Fig. 4

Fig.5

Fig.6

Fig.7

EP 0 631 370 B1

$\phi_1$

$\overline{\phi_1}$

$\phi'_{1sur}$

$\phi_2$

$\overline{\phi_2}$

$\phi'_{2sur}$

$V_{cc}$

$0$

$V_{cc}$

$0$

$V_{cc}$

$V'_{sur}$

$V_{cc}$

$0$

$V_{cc}$

$0$

$V_{cc}$

$V'_{sur}$

POWER-DOWN
CONDITION

OPERATIVE CONDITION

# Fig.8

EP 0 631 370 B1